# EUROPEAN PATENT APPLICATION

(11) **EP 4 663 252 A1**
(43) Date of publication of application: **17.12.2025**
(21) Application number: 24202930.4
(22) Date of filing: 26.09.2024
(51) Int. Cl.: A62C 31/02, B05B 1/30, B05B 9/01, F16L 27/08, F16L 33/02

(54) **FIRE EXTINGUISHER PISTOL WITH A VALVE PLUNGER**

(30) Priority: 11.06.2024 PT 2024119521
(71) Applicant: Carfi - Fábrica de Plásticos e Moldes, SA, 2430-024 Marinha Grande (PT)
(72) Inventor: FIGUEIREDO, CARLOS, 2430-306 Marinha Grande (PT)
(74) Representative: Couto, Cláudia

(57) **Abstract**

The present application describes a fire extinguisher pistol with hose rotation system. The Fire extinguisher pistol is characterized by comprising a main pistol structure comprising a tubular section with an inlet and an outlet; a second section, perpendicular to the tubular section, traversing said tubular section and an outer structure of said tubular section; a plunger suitable to fit the shape design of the second section; a lever adapted through one of its ends to the pistol structure by means of a metallic shaft which is suitable for pivoting said lever between a closed and an open position status, which is determined by the position of the plunger which is in contact with a portion of said lever.

## Description

### Technical Field

The present application describes a fire extinguisher pistol with hose rotation system.

### Background art

EP0755699A1 describes a fire extinguishing gun housing (4) has a through channel (6) for the extinguishing agent. The cross-section of the channel is adjustable through an adjustor operated by a lever (5) connected to a piston (7). The piston slides in a cylinder (13) of the housing. The piston has a ledge (8) whose ring-shaped surface points towards the through channel and is connected to same. The piston is forced into the through channel by spring force. The first end of the piston interacts with a seat (9) in the channel and in the closed state completely closes the channel. The first end of the piston has a sealing element (11) .

### Summary

The present invention describes a fire extinguisher pistol characterized by comprising: a main pistol structure comprising a tubular section with an inlet and an outlet; a second section, perpendicular to the tubular section, traversing said tubular section and an outer structure of said tubular section; a plunger suitable to fit the shape design of the second section; a lever adapted through one of its ends to the pistol structure by means of a metallic shaft which is suitable for pivoting said lever between a closed and an open position status, which is determined by the position of the plunger which is in contact with a portion of said lever.

In a proposed embodiment of present invention, the plunger is similar to a bolt shaped component and by comprising two notches suitable for adapting two seal rings, each of said rings being installed on opposite extremities of the plunger.

Yet in another proposed embodiment of present invention, in a wider portion of the plunger, a spring is thereto adapted, being followed by a cap which screws into the main pistol structure, ensuring that the spring pressures the plunger in the correct position within said second section.

Yet in another proposed embodiment of present invention, the plunger comprises an extremity, in a opposite position where the spring is adapted to, in contact with an adapted section of the lever.

Yet in another proposed embodiment of present invention, if the lever is pressed towards the main pistol structure, being pivoted by means of the metallic shaft, the plunger is pushed towards the spring, which will support its movement, while letting through a reasonable amount of extinguishing material proportional to the force exerted on the lever and a tension exerted by the spring.

Yet in another proposed embodiment of present invention, if the lever is released, in an opposite direction from the main pistol structure, being pivoted by means of the metallic shaft, the plunger will be recessed by the spring, while reducing the amount of extinguishing material passing through which is proportional to the force exerted on the lever and a tension exerted by the spring.

Yet in another proposed embodiment of present invention, the plunger comprises a narrow section between the two notches which enables the passing of an extinguishing material from a providing chamber located in the inlet of the tubular section main pistol structure to a receiving chamber located in the outlet of the tubular section main pistol structure.

Yet in another proposed embodiment of present invention, the main pistol structure inlet is suitable for accommodating a first end of a hose adaptor, said adaptor comprising on an opposite end of its tubular section another section suitable for accommodating a hose providing an extinguishing element.

Yet in another proposed embodiment of present invention, the first end of hose adaptor comprises two seal rings installed parallelly, and which ensure tightness between an inner section of the tubular main pistol structure and the outer portion of the adaptor.

Yet in another proposed embodiment of present invention, in a section between the adapter and the main pistol structure, a two hose adapter blocker are installed opposite each other in two suitable slots in the main pistol structure, ensuring that the hose adapter is correctly positioned and fitted to the main pistol structure and which is not inadvertently removed while ensuring a 360 degree rotational freedom of movement between the main pistol structure and the adapter attached to a hose.

Yet in another proposed embodiment of present invention, the hose adapter comprises an additional groove that adapts to the shape of the adapter blockers.

Yet in another proposed embodiment of present invention, the first seal ring of the two seal rings enables the tightness between the plunger and the main pistol structure during a movement of the plunger enabled by the lever.

Yet in another proposed embodiment of present invention, a second seal ring of the two seal rings enables the tightness between the providing chamber of the inlet of the tubular section main pistol structure and the receiving chamber existing in the outlet of the tubular section main pistol structure.

### General Description

Fire hose pistols for extinguishers with hose rotation systems should be connected to a hose by means of an hose adaptor and then the hose being connected to the extinguisher.

The present application describes a technology that favours the rotation of a hose connected to an extinguishing element diffuser pistol by means of an adapter, an adapter that fits into said pistol by means of a hose adapter locking system that fits into the holes in the pistol.

The hose adapter locking system has a design that allows a hose to be connected to the pistol and guarantees 360° free swivelling movement, with one of the main advantages of this system being that the hose adapter can be disassembled and reassembled.

The pistol also incorporates an extinguishing element sealing system that is guaranteed by the presence of a plunger inside, which also includes sealing O-rings.

With the lever pressed down, exerting a greater force on the spring, the plunger moves towards the opening that allows the extinguishing agent to pass through.

The hose adaptor fits in the pistol through by hose adaptor blocker that fits in the holes of the pistol. The hose adaptor blocker has a design that allows the hose to be connected to fire extinguisher pistol that rotates until 360° and the main advantage is that the hose adapter can be disassembled avoiding the process recycling, reassembled and can be used again.

The sealed pistol is ensured by the plunger on inside, which contains sealing O-rings. With the lever pressed down exerting a higher force on the spring, the plunger moves towards the opening that allows the fire extinguishing agent to pass through.

The lever comprises an ergonomic protective configuration that allows the user not to pinch their fingers when pressed the lever.

The fire extinguisher pistol is designed to restrict its opening at 60 Bar while still ensuring a full tightness.

The fire pistol needs a lower actuation force when pressing the lever due to the unique plunger and spring design.

### Brief description of the drawings

For better understanding of the present application, figures representing preferred embodiments are herein attached which, however, are not intended to limit the technique disclosed herein.
Fig. 1 - illustrates an isometric view of the developed fire extinguisher pistol (100) with hose rotation system.
Fig. 2 - illustrates a section view of the fire extinguisher pistol (100) with hose rotation system.
Fig. 3 - illustrates an isometric view of the plunger and seals of the fire extinguisher pistol (100) with hose rotation system.

### Description of Embodiments

With reference to the figures, some embodiments are now described in more detail, which are however not intended to limit the scope of the present application.

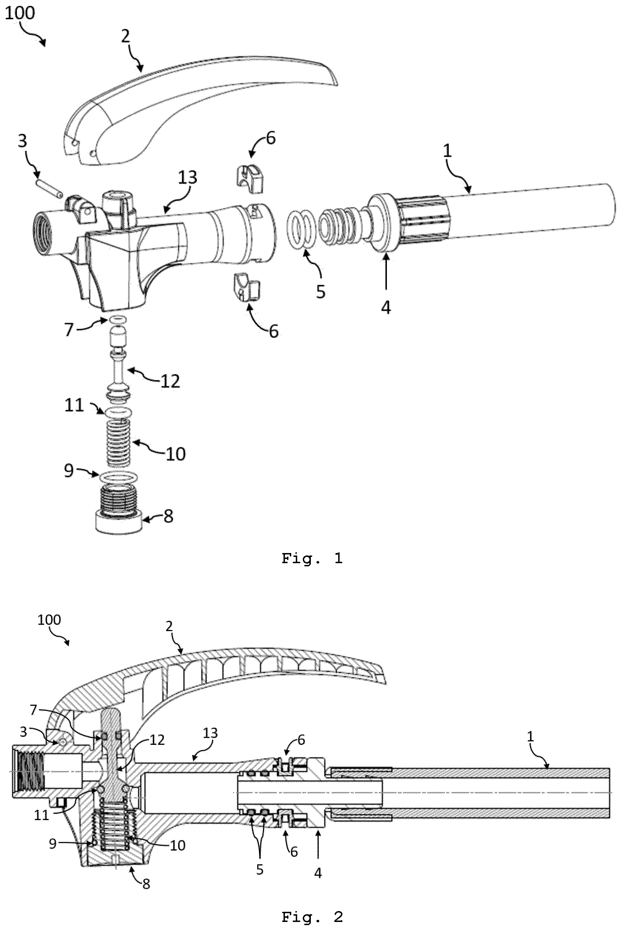

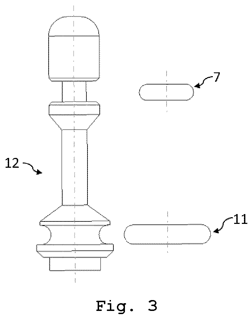

A particular embodiment of the fire extinguisher pistol (100) system disclosed herein is intended to enable a 360-degree hose (1) rotation. As disclosed in Fig.1, the pistol (100) comprises a main pistol structure (13) where a set of components is assembled. The main pistol structure (13) is similar to a tubular section, with an inlet and an outlet on each extremity, and on which, in a determined position of the first tubular section, a second section, perpendicular to the first section, is installed, traversing not only the first tubular section but also its outer structure. The second perpendicular section will comprise a plunger (12) which is suitable to be adapted to the overall design structure of said second perpendicular section. The plunger (12), in a preferred embodiment of the invention, is similar to a bolt shaped component, and comprises two notches suitable for comprising the adaptation of two seal (7, 11) rings, each one installed on opposite extremities of the plunger (12) as illustrated in Fig.3. The plunger (12) is adapted to said second perpendicular section with the two seal (7, 11) rings fitted in extremity portions, and in a wider portion of said plunger (12), a spring (14) is also adapted thereto, being followed by a cap (8) which screws into the main pistol structure (13) and ensures that the spring (14) pressures the plunger (12) in the correct position within said second section. In an opposite position to the one wherein the spring (14) is adapted, an extremity of the plunger (12) will be in contact with an adapted section of a lever (2), which in turn is adapted through one of its ends to the pistol structure (12) by means of an element, metallic shaft (3), which is adapted to allow the pivoting of this lever (2) between a closed and an open position of the pistol (100) through slight movements of the aforementioned plunger (12). The lever (2) comprises an elongated shape and ensures that, by means of its design and the adequate functioning shaft (3) that a user not to pinch their fingers when pressing said lever (2). Pressing the lever (2) will enable the plunger (12) to move towards the position of the spring (24), which will retain its movement, while letting through a reasonable quantity of extinguishing material proportional to the force exerted on the lever (2). The outlet of the main pistol structure (13) is adequate and suitable for adapting a nozzle. The inlet of the main pistol structure (13) is designed and suitable for accommodating a first end of a hose adaptor (4), which comprises on the opposite end of its tubular section another section suitable for accommodating a hose providing an extinguishing element. The first end of hose adaptor (4) will comprise two seal rings (5) installed parallelly, and which ensure tightness between an inner section of the tubular main structure (13) and the outer portion of the adaptor (4). As illustrated in Fig. 1 and Fig.2, in this same fitting section between the adapter (4) and the frame structure (13), two U-shaped pieces, hose adapter blocker (6), are installed opposite each other in two suitable slots created for this purpose in the frame structure (13), ensuring that the hose adapter (4) is correctly positioned and fitted to the structure (13) and which is not inadvertently removed during an ongoing operation, while ensuring that there is freedom of rotational movement between the frame (13) and the adapter (4) attached to a hose (1). To ensure this mentioned fitting, the hose adapter (4) also comprises an additional groove that adapts to the shape of the adapter blockers (6).

### Reference Signs List

- 1: - Hose.
- 2: - Lever.
- 3: - Metallic shaft.
- 4: - Hose adaptor.
- 5: - Seal ring.
- 6: - Hose adaptor blocker.
- 7: - first seal ring.
- 8: - cap.
- 9: - third seal ring.
- 10: - Spring.
- 11: - second seal ring.
- 12: - Plunger.
- 13: - Main pistol structure.
- 100: - Fire extinguisher pistol.

## Claims

1. Fire extinguisher pistol (100) **characterized by** comprising:
a main pistol structure (13) comprising a tubular section with an inlet and an outlet;
a second section, perpendicular to the tubular section, traversing said tubular section and an outer structure of said tubular section;
a plunger (12) suitable to fit the shape design of the second section;
a lever (2) adapted through one of its ends to the pistol structure (13) by means of a metallic shaft (3) which is suitable for pivoting said lever (2) between a closed and an open position status, which is determined by the position of the plunger (12) which is in contact with a portion of said lever (2).

2. Fire extinguisher pistol (100) according to the previous claim, **characterized by** the plunger (12) being similar to a bolt shaped component and by comprising two notches suitable for adapting two seal (7, 11) rings, each of said rings being installed on opposite extremities of the plunger (12).

3. Fire extinguisher pistol (100) according to any of the previous claims, **characterized by** in a wider portion of the plunger (12), a spring (14) is thereto adapted, being followed by a cap (8) which screws into the main pistol structure (13), ensuring that the spring (14) pressures the plunger (12) in the correct position within said second section.

4. Fire extinguisher pistol (100) according to any of the previous claims, **characterized by** the plunger (12) comprising an extremity, in a opposite position where the spring (14) is adapted to, in contact with an adapted section of the lever (2).

5. Fire extinguisher pistol (100) according to any of the previous claims, **characterized by** if the lever (2) is pressed towards the main pistol structure (13), being pivoted by means of the metallic shaft (3), the plunger (12) is pushed towards the spring (14), which will support its movement, while letting through a reasonable amount of extinguishing material proportional to the force exerted on the lever (2) and a tension exerted by the spring (14).

6. Fire extinguisher pistol (100) according to any of the previous claims, **characterized by** if the lever (2) is released, in an opposite direction from the main pistol structure (13), being pivoted by means of the metallic shaft (3), the plunger (12) will be recessed by the spring (14), while reducing the amount of extinguishing material passing through which is proportional to the force exerted on the lever (2) and a tension exerted by the spring (14).

7. Fire extinguisher pistol (100) according to any of the previous claims, **characterized by** the plunger (12) comprising a narrow section between the two notches which enables the passing of an extinguishing material from a providing chamber located in the inlet of the tubular section main pistol structure (13) to a receiving chamber located in the outlet of the tubular section main pistol structure (13).

8. Fire extinguisher pistol (100) according to any of the previous claims, **characterized by** the main pistol structure (13) inlet being suitable for accommodating a first end of a hose adaptor (4), said adaptor (4) comprising on an opposite end of its tubular section another section suitable for accommodating a hose providing an extinguishing element.

9. Fire extinguisher pistol (100) according to any of the previous claims, **characterized by** the first end of hose adaptor (4) comprising two seal rings (5) installed parallelly, and which ensure tightness between an inner section of the tubular main pistol structure (13) and the outer portion of the adaptor (4).

10. Fire extinguisher pistol (100) according to any of the previous claims, **characterized by** in a section between the adapter (4) and the main pistol structure (13), a two hose adapter blocker (6) are installed opposite each other in two suitable slots in the main pistol structure (13), ensuring that the hose adapter (4) is correctly positioned and fitted to the main pistol structure (13) and which is not inadvertently removed while ensuring a 360 degree rotational freedom of movement between the main pistol structure (13) and the adapter (4) attached to a hose (1).

11. Fire extinguisher pistol (100) according to any of the previous claims, **characterized by** the hose adapter (4) comprising an additional groove that adapts to the shape of the adapter blockers (6).

12. Fire extinguisher pistol (100) according to any of the previous claims, **characterized by** a first seal (7) ring of the two seal (7, 11) rings enabling the tightness between the plunger (12) and the main pistol structure (13) during a movement of the plunger (12) enabled by the lever (2).

13. Fire extinguisher pistol (100) according to any of the previous claims, **characterized by** a second seal (11) ring of the two seal (7, 11) rings enabling the tightness between the providing chamber of the inlet of the tubular section main pistol structure (13) and the receiving chamber existing in the outlet of the tubular section main pistol structure (13) .
